# EUROPEAN PATENT APPLICATION

(11) **EP 3 103 759 A1**
(43) Date of publication of application: **14.12.2016**
(21) Application number: 16172595.7
(22) Date of filing: 02.06.2016
(51) Int. Cl.: B66F 9/065, B66F 9/075

(54) **FRAME STRUCTURE OF MOBILE REACH MACHINE**

(30) Priority: 10.06.2015 FI 20155443
(71) Applicant: SKS Toijala Works Oy, 37800 Akaa (FI)
(72) Inventor: Korpimaa, Heikki, 37800 Akaa (FI)
(74) Representative: Kolster Oy Ab

(57) **Abstract**

Frame for a mobile reach machine. The frame (3) comprises a longitudinal body part (18) and a transverse body part (19) at a front end portion (3a) of the longitudinal body part. A rear end portion (3b) comprises a mounting bracket (11) extending upwardly and comprising means for mounting a boom (12). The mounting bracket has a closed outer shell structure.

## Description

### Background of the invention

The invention relates to a frame of a mobile reach machine.

The invention further relates to a mobile reach machine.

The field of the invention is defined more specifically in the preambles of the independent claims.

Reach machines are mobile material handling vehicles, which are typically used in freight terminals and in different loading and unloading sites. The reach machines are capable of lifting and transporting loads such as containers, trailers and sheet metal coils, for example. Depending on the load handling tools and means, the reach machine may also be suitable for handling bulk material, such as logs. The reach machine comprises a carrier and a boom is hinged to the carrier. The boom is arranged above the carrier and is in longitudinal direction of the reach machine. The carrier comprises a longitudinal main frame and is typically provided with rubber tires. The carrier is further provided with one or more energy devices mounted on the main frame. The known solutions relating to the frame structures of the reach machines have shown to contain some disadvantages.

### Brief description of the invention

An object of the invention is to provide a novel and improved frame structure for a reach machine and to a mobile reach machine provided with the same.

The frame according to the invention is characterized by features of first independent apparatus claim.

The reach machine according to the invention is characterized by features of second independent apparatus claim.

An idea of the disclosed solution is that the mounting bracket of a reach machine has a closed structure. Further, the mounting bracket comprises two bracket side plates located at a transverse distance from each other and forming lateral side surfaces of the mounting bracket. The frame body part has two opposite body side plates forming the lateral side surfaces of the longitudinal body part at the mounting bracket. Vertical lower end portions of the bracket side plates are fastened against outer or inner surfaces of the body side plates of the longitudinal body part.

An advantage of the disclosed solution is that the closed structure provides good stiffness and durability for the mounting bracket. Loads directed from the boom the mounting bracket may be transmitted to main frame conveniently and effectively. Further, between the bracket plates and the longitudinal body part are large connecting surfaces, which is advantageous regarding ability to transmit loads between the connected body elements.

According to an embodiment, the longitudinal body part comprises two opposing body side plates located at a transversal distance from each other and constitutes the lateral side surfaces of the longitudinal body part at the mounting bracket. The mounting bracket comprises two opposing bracket side plates located at a transverse distance from each other and forming lateral side surfaces of the mounting bracket. The bracket side plates of the mounting bracket and the body side plates of the longitudinal body part are connected to each other in order to constitute two load transmitting structures at least on one side surface of the frame. The bracket side plates may be part of the body side plates or the sides of the plates may be connected to each other.

According to an embodiment, the mounting bracket comprises two bracket side plates located at a transverse distance from each other and forming lateral side surfaces of the mounting bracket. The frame body part has two opposite body side plates forming the lateral side surfaces of the longitudinal body part at the mounting bracket. The bracket side plates are separately formed elements relative to the body side plates. Vertical lower end portions of the bracket side plates are fastened against outer surfaces of the body side plates of the longitudinal body part. In an alternative solution, the lower end portions of the bracket plates are fastened against inner surfaces of the body side plates. Between the bracket plates and the longitudinal body part are large connecting surfaces, which is advantageous regarding ability to transmit loads between the connected body elements.

According to an embodiment, the lower end portions of the bracket side plates comprise front-directed extension parts facing towards the front end of the longitudinal body part and being fastened against the body side plates of the longitudinal body part.

According to an embodiment, the mounting bracket comprises two bracket side plates located at a transverse distance from each other. Between the bracket side plates are several intermediate plates constituting together with the bracket side plates the closed outer shell structure for the mounting bracket. The intermediate plates may be the rear plate and front plate of the mounting bracket, or alternatively there may more than two intermediate plates depending on the design of the mounting bracket.

According to an embodiment, the mounting bracket comprises a planar front surface and a planar rear surface. The planar surfaces may be formed by a front plate and a rear plate, which are connecting bracket or side plates of the mounting bracket. The planar front surface is inclined towards the rear end portion of the frame and is thereby in angular position relative to vertical axis. The planar rear surface is directed substantially vertically. The front plate and the rear plate are fastened to edge portions of the bracket plates, whereby the shape of upper portions of the bracket plates also have inclined front edges and substantially vertical rear edges. Strength simulations have shown that the described shape of the mounting bracket is advantageous.

According to an embodiment, the planar front surface described in the previous embodiment is inclined towards the rear end portion of the frame and an inclination angle is 25 to 35° relative to vertical axis.

According to an embodiment, the mounting bracket comprises a front surface plate and at a lower end of the front surface plate is a curved portion for connecting an extension part of the front surface plate. The extension part extends towards a front part of the frame and is connected to the upper surface of the longitudinal body part. The extension part transmits well loads between the mounting bracket and the longitudinal body part. The curved part between the inclined portion and the extension portion of the front plate is strength theoretically beneficial. Thus, this embodiment further improves strength of the mounting bracket and assists in conducting loads between the components.

According to an embodiment, the frame further comprises a transversal body part, which is located at the front end portion of the longitudinal body part, and extends laterally relative to the longitudinal body part, whereby top-view of the front part of the frame resembles letter T. The transverse body part may be provided with first mounting points configured to support at least one transversal rigid front axle to the frame. Thanks to the transverse body part, the front axle may have an excellent support.

According to an embodiment, at least a front part of the longitudinal body part is located asymmetrically in relation to the transverse body part. Thereby a centre line of the longitudinal body part is located at a lateral distance from a centre line of the frame passing in a longitudinal direction of the frame through a middle point of the transversal body part. The asymmetrical positioning of the front part of the longitudinal body part provides more space for mounting devices needed on a side of the main frame.

According to an embodiment, the longitudinal body part and the mounting bracket are both located symmetrically at centre line of the main frame. This embodiment may be utilized when there is no need for extra mounting space on a side of the main frame.

According to an embodiment, the main frame comprises at least one mounting place on at least one side surface of the front part of the longitudinal body part. Devices, containers, auxiliary machinery and preassembled units, modules or power packs may be mounted to the mounting place. If the longitudinal body part is located asymmetrically, then more free space, and especially more lateral width, is usable for mounting the desired devices.

According to an embodiment, the top surface of the longitudinal body part is sloped. Thereby, vertical dimension i.e. height of the longitudinal body part increases towards the mounting bracket. A first height at a front end of the longitudinal body part is minor than a second height at a proximity of the mounting bracket. Thus, the longitudinal body part does not have constant vertical dimension between the front part and the mounting bracket. Instead the longitudinal body part may have greatest height at the mounting bracket, which is beneficial since greatest loadings are directed to a point where the mounting bracket connects to the longitudinal body part.

According to an embodiment, the bottom surface of the longitudinal body part is substantially horizontal and the top surface of the longitudinal body part is sloped. Also in this embodiment, height_of the longitudinal body part increases towards the rear end.

According to an embodiment, transversal width of at least the front part of the longitudinal body part is minor than lateral width of the mounting bracket. A rear end portion behind the mounting bracket may have substantially similar lateral width as the mounting bracket.

According to an embodiment, the frame is made of metal material by utilizing sheet metal techniques and welding.

The above-disclosed embodiments can be combined to form suitable solutions provided with necessary features disclosed in this patent application.

### Brief description of the figures

Some embodiments are described in more detail in the accompanying drawings, in which
Figure 1 is a schematic side view of a mobile reach machine,
Figure 2 is a schematic bottom view of a carrier of a reach machine,
Figure 3 is a schematic view of a main frame of a reach machine, and mounting places on both sides of the frame,
Figure 4 is a schematic view of the main frame of the Figure 3 seen in another position,
Figure 5 is a schematic view of a frame seen longitudinally towards a rear portion of the frame, and
Figure 6 is a schematic view showing a second side of the main frame.

For the sake of clarity, the figures show some embodiments of the disclosed solution in a simplified manner. In the figures, like reference numerals identify like elements.

### Detailed description of some embodiments

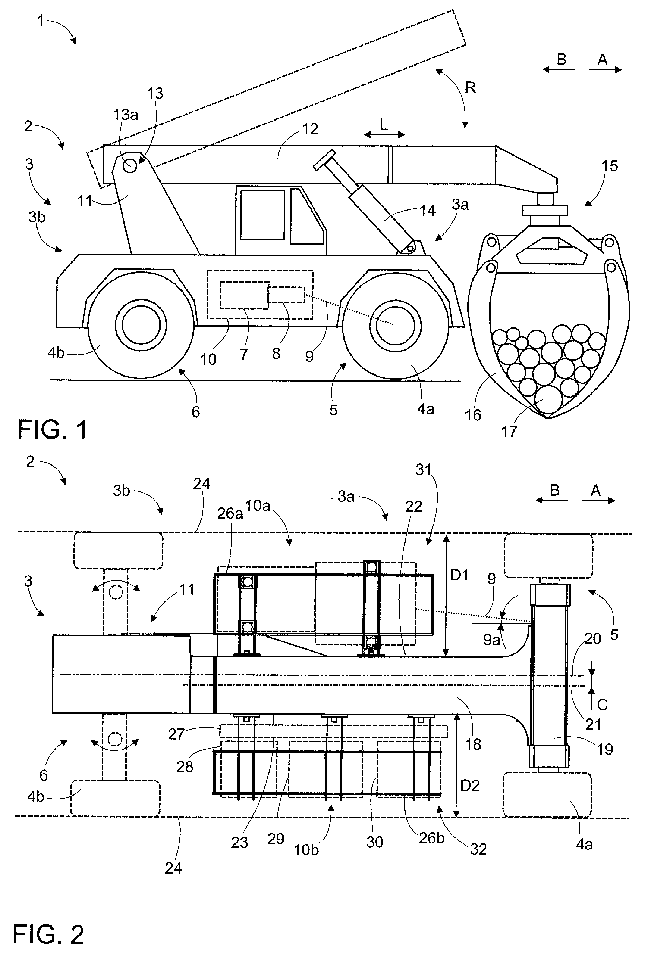

Figure 1 shows a reach machine 1 comprising a mobile carrier 2 provided with a main frame 3, and a plurality of wheels 4a, 4b. At a front end portion 3a of the main frame 3 may be a rigid non-steerable front axle 5 with front wheels 4a, and at the rear end portion 3b of the main frame 3 may be a steerable rear axle setting 6 with rear wheels 4b. The reach machine 1 may be front axle driven, whereby driving power may be transmitted from an energy device 7 via transmission means 8 to the front axle 5 by means of a cardan shaft 9. Alternatively, the power transmission may be hydraulic, for example. The energy device 7 of the reach machine 1 may comprise a combustion engine. The energy device 7 and the related auxiliary devices may be configured to form an energy module 10. The energy module 10 may be mounted against a side surface of the main frame 3.

The main frame 3 comprises a mounting bracket 11 at the rear end portion 3b for mounting a boom 12 above the carrier 2. The boom 12 is in a longitudinal direction of the reach machine 1 and may be located at the central axis of the machine. The boom 12 may be connected to the mounting bracket 11 by means of a horizontal joint 13 comprising a hinge pin 13a, or corresponding connecting element. The boom 12 may be pivoted R relative to the joint 13 by means of one or more lifting actuators 14, which may hydraulic cylinders, for example. Figure 1 illustrates by means of broken lines the boom 12 in a lifted position. A distal end portion of the boom 12 is provided with load carrying means 15. In the solution shown in Figure 1, the boom 12 comprises clamping means 16 for handling logs 17. Length of the boom 12 may be altered L telescopically. In Figure 1 forward driving direction is indicated by an arrow A and a reverse driving direction is indicated by an arrow B.

Figure 2 shows a carrier 2 of a reach machine seen from below. A main frame 3 may comprise a longitudinal body part 18 and a transversal body part 19, which is arranged at a front portion 3a of the main frame 3. Thereby, the main frame 3 may have a shape resembling letter T. The front axle 5 may be fastened to the transversal body part 19. At least the front part of the longitudinal body part 18 of the main frame 3 is located asymmetrically relative to centre line 20 of the main frame 3. The centre line 20 passes in a longitudinal direction of the main frame through a middle point of the transversal body part 19. The front portion of the longitudinal body part 19 has centre line 21, which is located at a transverse distance C from the centre line 20 of the main frame 3. The front part of the longitudinal body part 19 may be a tubular piece having a closed outer shell. The cross section of the front part of the longitudinal body part 19 has lateral side surfaces 22 and 23 facing into opposite directions. Since the body part 19 is positioned asymmetrically, the lateral side surfaces 22 and 23 are located at different transversal directions from outlines 24 passing longitudinally through outermost lateral surfaces of the reach machine. Then, the first side surface 22 is located at greater first lateral distance D1 from the outline 24 compared to second lateral distance D2 of the second side surface 23.

The side surfaces 22 and 23 may be provided with energy modules 10a, 10b. A first energy module 10a comprising a power generating device 25, such as a combustion engine, electrical motor or a hybrid power pack, may be mounted to the first side surface 22 by means of a sub frame 26a. The first energy module 10a may also comprise a hydraulic pump, transmission means and needed additional devices. The power generating device 25 and the hydraulic pump are examples of energy devices.

The second energy module 10b also comprises a sub frame 26b and pressure accumulators 27, fuel storages 28 and other storage elements 29 and 30 may be arranged to the sub frame 26b. The listed components 27, 28, 29 and 30 are also energy devices.

Thereby, the first side surface 22 may be provided with a first mounting place 31 and the second side surface 23 may be provided with a second mounting place 32. The first mounting place 31 comprises a larger free space for mounting the energy modules than the second mounting place 32. Typically, the power generating device 25 requires more space than the energy storage devices, wherefore the power generating device may be arranged to the first mounting place 31.

However, it is possible that the mounting places 22, 23 may be provided with any other kind or devices, machineries, auxiliary devices and storages, which do not constitute a module but are mounted separately.

Figure 2 further shows that, thanks to the disclosed asymmetrical positioning of the first energy module 10a, an angle 9a of a cardan shaft 9 relative to the front axle 5 may be decreased. This improves durability of the transmission.

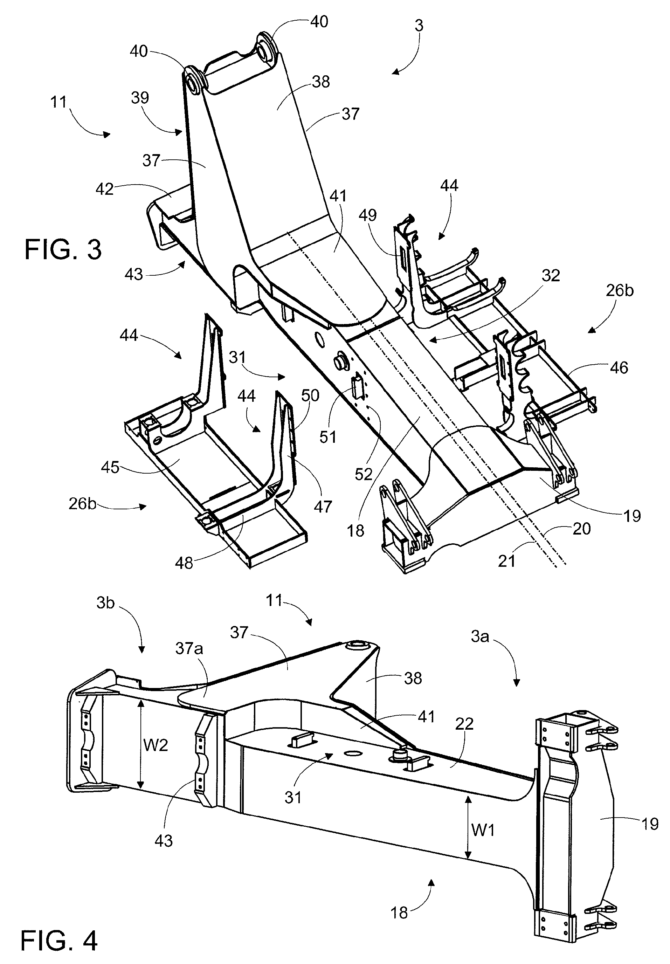

Figure 3 discloses a main frame 3, which has a longitudinal body part 18, a transverse body part 19 and a mounting bracket 11. As can be seen, the longitudinal body part 18 and the mounting bracket 11 may both have structures having closed outer shells, whereby they comprise box-like structures which are beneficial regarding withstanding and transmitting loads directed to the main frame 3 during the operation of a reach machine. The mounting bracket 11 may comprise side plates or bracket plates 37, a front plate 38 and a rear plate 39. At an upper portion of the mounting bracket 11 there may be connecting lugs 40 facing upwards and serving as boom connecting means.

The mounting bracket 11 may be integrated to be part of the structure of the longitudinal body part 18. The bracket plates 37 may be connected to inner or outer surfaces of side plates of the longitudinal body part. At a lower portion of the mounting bracket 11 there may also be an extension part 41 for improving transmission of loads between the mounting bracket 11 and the longitudinal portion 18. The mounting bracket 11 may be located symmetrically at the central axis 20 of the machine. However, at least the front part of the longitudinal body part 18 may be located asymmetrically, whereby central axis 20 and 21 do not coincide. The rear most part of the main frame 3 may comprise support surfaces 42 for supporting a counter weight, and further, support surfaces 43 for mounting a rear axle setting.

Figure 3 further discloses that the main frame 3 may be provided with energy modules 10a, 10b, which may be mounted to lateral mounting places 31, 32 on the side surfaces of the front part of the longitudinal body part 18. The energy modules 10a, 10b comprise sub frames 26a, 26b, which be formed of two or more substantially L-shaped support elements 44. The support elements 44 are located at longitudinal distances from each other and may be connected to each other by means of a bottom plate 45 or any other connecting element 46 so that the sub frame can be handled as one piece having sufficient rigidity. The L-shaped support element 44 comprises a substantially vertical part 47 and a substantially horizontal part 48. An upper part of the vertical part 47 may be provided with one or more openings 49, which may be part of a first fastening system of the energy module. The vertical part 47 may also comprise several openings 50 allowing screw coupling and serving as a part of a second fastening system of the module. At the mounting places 31 and 32 there may be support surfaces such as hook-elements 51, which are part of the first fastening system and allow the sub frame 26a, 26b to be supported initially by passing the hooks-elements through the openings 49. The mounting places 31, 32 also comprise threaded openings 52 for receiving fastening screws and thereby serving as a part of the second fastening system.

Figure 4 shows that width W1 of the front portion of the longitudinal body part 18 is minor than width W2 of the rear part of the frame. As can be seen, a lower portion 37a of the bracket plate 37 may be fastened against an outer surface of a side plate of the longitudinal body part 18. The bracket plate 37 may extend to the bottom surface of the longitudinal body part 18. Further, the extension part 41 may provide a streamlined transition between the lower end of the mounting bracket and an upper surface of the longitudinal body part. On the first side surface 22 there may be a kind of recess at a location where the front part of the longitudinal body 18 changes to the structures of the mounting bracket 11 and the rear part of the frame 3b. The transition may be stepwise and may comprise a transverse shoulder part, which is shown in Figure 4. The recess or space below the extension part 41 may be utilized for mounting modules or devices on the side surface 22.

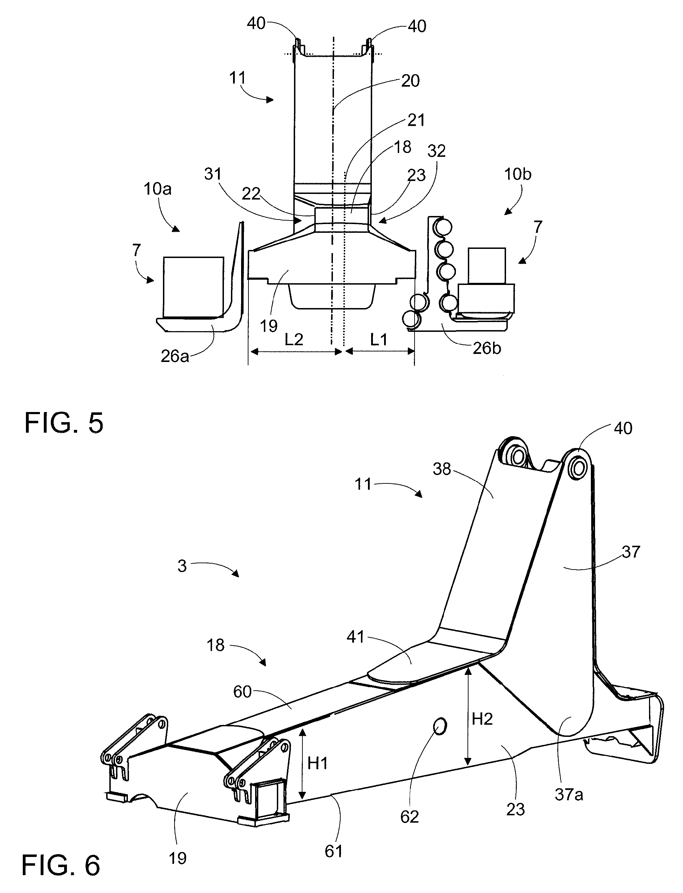

Figure 5 illustrates that the centre lines 20 and 21 are at a lateral distance from each other. Then, later distances L1 to L2 from ends of the transversal body part 19 to the central line 21 of the longitudinal body part 19 are different in size. Side surfaces 22 and 23 of the frame may be provided with energy modules 10a, 10b, or with separately fastened components.

Figure 6 shows that an upper surface or plate 60 of the longitudinal body part 18 may be sloped so that height H1 at the front is minor than height H2 closer to the mounting bracket 11. A bottom surface or plate 61 may also be sloped or it may substantially horizontal in an operational position of the machine. Between the side plates 22 and 23 may be a tubular element 62, which may serve as a stiffener preventing buckling and may also serve as a lead-through for cables, tubes and hoses. Figure 6 also discloses that a lower portion of the bracket plate 37 may extend towards the front part of the frame and may thus transmit loads well.

Let it be mentioned that the disclosed bracket structure may be utilized also in such frame structures which are symmetrical having no asymmetrically positioned longitudinal body parts and mounting places.

The drawings and the related description are only intended to illustrate the idea of the invention. In its details, the invention may vary within the scope of the claims.

## Claims

1. A frame of a mobile reach machine comprising:
a longitudinal body part (18), which has a front end and a rear end, and which is a tubular piece provided with a closed outer shell comprising a lateral first side surface (22), a lateral second side surface (23), a top surface (60) and a bottom surface (61);
at least one mounting bracket (11), which is located at the rear end portion (3a) of the frame (3) and protrudes upwardly from an upper surface (60) of the longitudinal body part (18) an upper part of which mounting bracket (11) is provided with boom connecting means (13); and
the mounting bracket (11) is a plate structure provided with a closed outer shell;
**characterized in that**
the mounting bracket (11) comprises two bracket side plates (37) located at a transverse distance from each other and forming lateral side surfaces of the mounting bracket (11);
the frame body part has two opposite body side plates forming the lateral side surfaces of the longitudinal body part at the mounting bracket; and
vertical lower end portions of the bracket side plates (37) are fastened against outer or inner surfaces of the body side plates of the longitudinal body part (18).

2. The frame as claimed in claim 1, **characterized in that**
the lower end portions of the bracket side plates (37) comprise front-directed extension parts facing towards the front end (3a) of the longitudinal body part (18) and being fastened against the body side plates of the longitudinal body part.

3. The frame as claimed in claim 1 or 2, **characterized in that**
the mounting bracket (11) comprises two bracket side plates (37) located at a transverse distance from each other; and
between the bracket side plates (37) are several intermediate plates (38, 39) constituting together with the bracket side plates (37) the closed outer shell structure of the mounting bracket (11).

4. The frame as claimed in any one of the preceding claims 1 to 3, **characterized in that**
the mounting bracket (11) comprises a front surface plate (38) and a rear surface plate (39);
the front surface plate (38) is inclined towards the rear end portion (3b) of the frame and is thereby in angular position relative to vertical axis; and
the rear surface plate (39) is directed substantially vertically.

5. The frame as claimed in any one of the preceding claims 1 to 4, **characterized in that**
the mounting bracket (11) comprises a front surface plate (38);
at a lower end of the front surface plate (38) is a curved portion connecting an extension part (41) of the front surface plate; and
the extension part (41) extends towards a front part (3a) of the frame and is connected to the upper surface (60) of the longitudinal body part (18).

6. The frame as claimed in any one of the preceding claims 1 to 5, **characterized in that**
the frame (3) further comprises a transversal body part (19), which is located at the front end portion of the longitudinal body part, and extends laterally relative to the longitudinal body part (18), whereby top-view of the front part of the frame resembles letter T.

7. The frame as claimed in claim 6, **characterized in that**
at least a front part of the longitudinal body part (18) is located asymmetrically in relation to the transverse body part (19), whereby a centre line of the longitudinal body part (21) is located at a lateral distance from a centre line (20) of the frame (3) passing in a longitudinal direction of the frame through a middle point of the transversal body part (19).

8. The frame as claimed in any one of the preceding claims 1 to 7, **characterized in that**
the top surface (60) of the longitudinal body part (18) is sloped; and vertical height of the longitudinal body part increases towards the mounting bracket (11), whereby a first height (H1) at a front end of the longitudinal body part is minor than a second height (H2) at a proximity of the mounting bracket (11).

9. A mobile reach machine, comprising:
a movable carrier (2) provided with a frame (3) comprising a longitudinal body part (18) and a protruding mounting bracket (11) at a rear end portion of the longitudinal body part;
a transversal rigid front axle (5) at a front end of the frame and being provided with at least two front wheels (4a);
a steerable transversal rear axle setting (6) at the rear end portion of the frame and being provided with at least two rear wheels (4b);
at least one energy device (7) for generating operating power for the reach machine (1);
an elongated boom (12), which is located longitudinally above the frame (3), and which comprises a first end mounted pivotally to the mounting bracket (11), and a distal second end is provided with load carrying means (15); and
at least one lifting actuator (14) for moving the boom (3) relative to the pivotal mounting, whereby the second end of the boom (3) is allowed to be lifted and lowered;
**characterized in that**
the longitudinal body part (18) and the mounting bracket (11) are both plate structures provided with closed outer shells, and wherein connection between the longitudinal body part (18) and the mounting bracket (11) is in accordance with claim 1.
